# EUROPÄISCHE PATENTSCHRIFT

(11) **EP 2 838 759 B1**
(45) Veröffentlichungstag und Bekanntmachung des Hinweises auf die Patenterteilung: **22.08.2018**
(21) Anmeldenummer: 13712146.3
(22) Anmeldetag: 21.03.2013
(51) Int. Cl.: B60N 2/75

(54) **TRÄGERSTRUKTUR FÜR EINE ARMLEHNE EINES FAHRZEUGS**
SUPPORT STRUCTURE FOR AN ARMREST OF A VEHICLE
STRUCTURE DE SUPPORT POUR UN ACCOUDOIR DE VÉHICULE

(30) Priorität: 19.04.2012 DE 102012007845
(43) Veröffentlichungstag der Anmeldung: 25.02.2015
(73) Patentinhaber: Audi AG, 85045 Ingolstadt (DE)
(72) Erfinder: MANGOLD, Steffen, 73495 Stödtlen (DE)
(74) Vertreter: Mader, Wilfried
(86) Internationale Anmeldenummer: PCT/EP2013/000859
(87) Internationale Veröffentlichungsnummer: WO 2013/156102

(56) Entgegenhaltungen:
- EP-A1- 0 518 358
- FR-A1- 2 954 242
- JP-A- 2000 051 960
- JP-A- 2000 158 053
- JP-A- 2010 221 939

## Beschreibung

Die Erfindung betrifft eine Trägerstruktur für eine Armlehne zur schwenkbaren Anlenkung an eine Halterung eines Fahrzeugs gemäß Oberbegriff des Patentanspruchs 1.

Eine gattungsbildende Trägerstruktur für eine in einer Sitzlehne eines Fondsitzes versenkbaren Armlehne eines Fahrzeugs ist aus der EP 0 518 358 A1 bekannt. Diese Trägerstruktur umfasst einen U-förmigen, als Bügel ausgebildeten Träger, bei dem die freien Enden mit einem Querträger verbunden sind. Mit diesem Querträger, der U-förmig ausgeführt ist, wird die Trägerstruktur schwenkbar mit der Sitzlehne verbunden. Diese U-Form des Querträgers umfasst zwei Schenkelteile, die über ein Basisteil verbunden sind. Ein Bolzen ist durch diese beiden Schenkelteile geführt und dient als Schwenkachse der Trägerstruktur. Die freien Enden des U-förmigen Trägers sind mit dem Basisteil des U-förmigen Querträgers verbunden.

Des Weiteren beschreibt auch die JP 2010 221939 A eine Trägerstruktur für eine Armlehne, die verschwenkbar mit einem Seitenteil einer Sitzlehne eines Fondsitzes verbunden ist. Diese Trägerstruktur umfasst zwei Befestigungselemente, die über einen bügelförmig ausgebildeten Träger verbunden sind. Ein zur Sitzlehne benachbartes Befestigungselement wird mittels eines Bolzens verschwenkbar mit einer Rahmenstruktur der Sitzlehne verbunden, während das gegenüberliegende Befestigungselement mit einem Hilfsträger verschwenkbar verbunden ist, wobei dieser Hilfsträger an die Rahmenstruktur der Sitzlehne angebunden ist.

Ferner offenbart auch die FR 2 954 142 A1 eine Rücksitzlehne eines Fondsitzes eines Fahrzeugs, die eine um eine Drehachse verschwenkbare Armlehne umfasst und in der Rücksitzlehne versenkbar ist. Die Armlehne wird verschwenkbar zwischen seitlichen Stützen, die unabhängig voneinander mit der Rücksitzlehne verbunden sind, angeordnet. Einer dieser beiden Stützen ist als Blechteil ausgeführt, welches zum einen Flansche zum Hintergreifen einer Verstärkungsstruktur der Rücksitzlehne und zum anderen angeformte Tubenteile zur Funktionsintegration aufweist.

Der Vollständigkeit halber soll auf die JP 2000 051960 A sowie die JP 2000 158053 A verwiesen werden, die jeweils die Herstellung von Tubenteilen auf einer Platte durch Tubenformung beschreiben.

Bei schwenkbaren Mittelarmlehnen eines Fahrzeugs, insbesondere eines Kraftfahrzeugs wird der Auflagekörper, der die Polsterung zur Ablage der Unterarme eines Fahrzeuginsassen dient, von Trägerarmen einer Trägerstruktur getragen, die schwenkbar an einer Halterung des Fahrzeugs angelenkt sind.

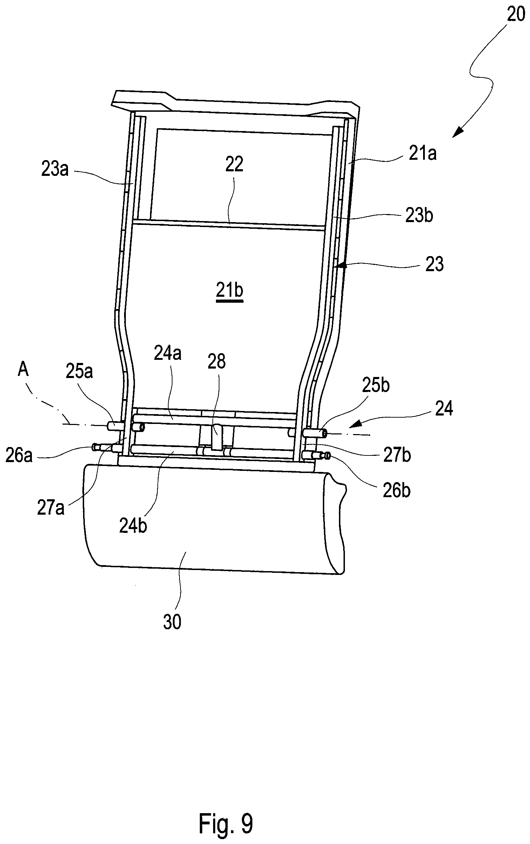

Eine solche Trägerstruktur 23 für eine an einer Halterung 30 einer Fondsitzbank eines Kraftfahrzeugs angelenkten Mittelarmlehne 20 zeigt Figur 9 in einer Ansicht von unten auf die Mittelarmlehne 20. Diese Trägerstruktur 23 umfasst einen Querträger 24, der aus einem rechteckförmigen Rahmen aus zwei parallel zu einer Schwenkachse A verlaufenden massiven Rundstäben 24a und 24b besteht, deren Enden mittels Stegen 27a und 27b verbunden sind und die in zwei Trägerarme 23a und 23b übergehen. Im mittleren Bereich der Trägerarme 23a und 23b werden sie mittels einer Querstrebe 22 verbunden. Diese Trägerarme 23a und 23b tragen den Unterbau 21b eines Auflagekörpers 21a der Armlehne 20.

Die Stege 27a und 27b tragen jeweils ein Drehlager 25a und 25b, die zur Schwenklagerung der Trägerstruktur 23 in der Halterung 30 dienen. Ferner ist der Rundstab 24b zur Bildung eines Anschlagbolzens 26a und 26b über die Stege 27a und 27b hinaus geführt. Diese Anschlagbolzen 26a und 26b wirken zusammen mit einem Crashpendel (nicht dargestellt) und einer Fanghakenabstützung 28 zur Blockierung einer unkontrollierten Schwenkbewegung der Armlehne 20.

Die Trägerarme 23a und 23b sind aus einem rohrförmigen Profil, während die Rundstäbe 24a und 24b des Querträgers 24 aus Vollmaterial hergestellt sind und durch Schweißen mit dem Querträger 24 verbunden werden. Eine solche Trägerstruktur 23 aus Stahl weist die erforderliche Stabilität auf, um alle auftretenden Kräfte und Momente aufzufangen. Nachteilig sind jedoch das hohe Gewicht und die mit hohen Kosten verbundene Herstellung einer solchen Trägerstruktur 23.

Aufgabe der Erfindung ist es daher, eine Trägerstruktur für eine schwenkbare Armlehne, insbesondere eine Mittelarmlehne für ein Fahrzeug zu schaffen, die eine stabile Anbindung der Trägerstruktur der Armlehne an die Konsole des Fahrzeugs bei niedrigem Gewicht und geringen Herstellkosten ermöglicht.

Diese Aufgabe wird gelöst durch eine Trägerstruktur mit den Merkmalen des Patentanspruchs 1.

Eine solche Trägerstruktur für eine Armlehne zur schwenkbaren Anlenkung an eine Halterung eines Fahrzeugs, welche zwei einen Auflagekörper tragende Trägerarme aufweist, wobei die Trägerarme an einem Ende mit einem Querträger verbunden sind und der Querträger Bolzen zur Schwenklagerung in der Halterung aufweist, zeichnet sich erfindungsgemäß dadurch aus, dass
- der Querträger quaderförmig mit eine Mantelfläche bildenden Seitenflächen und gegenüberliegenden Grundflächen ausgebildet ist,
- der Querträger durch Tubenformung, Biegung und Stanzung aus einem der Abwicklung des Querträgers entsprechenden Stahlblech hergestellt ist, wobei die Bolzen als Tubenteil an den Grundflächen des Querträgers angeformt sind und
- jeweils ein Ende eines Trägerarms von einer Spalte aufgenommen und mit dem Querträger verbunden ist.

Mit dieser erfindungsgemäßen Trägerstruktur kann eine wesentliche Gewichtsreduzierung gegenüber der bekannten Trägerstruktur nach Figur 9 erreicht werden, ohne dass Nachteile hinsichtlich der Festigkeit und Steifigkeit dieser Trägerstruktur in Kauf zu nehmen sind. Ein weiterer Vorteil liegt darin, dass die Herstellung dieser Trägerstruktur durch Tubenformung, Biegung und Stanzung auch kostengünstiger im Vergleich zu einer Herstellung eines Querträgers aus Vollmaterial ist. Die für die Schwenklagerung erforderlichen Tuben können auch mit einem Innengewinde ausgebildet werden, so dass die für die Schwenklagerung erforderlichen Komponenten angeschraubt werden können.

Mit einem solchen quaderförmigen Querträger, der bspw. in einer flachen Form ausgeführt sein kann, wird die für eine schwenkbare Armlehne erforderliche Festigkeit und Steifigkeit erreicht.

Dadurch dass der Querträger mit Grundflächen ausgebildet ist, deren in der Abwicklung freien Kanten mit den benachbarten Kanten der Seitenflächen Spalten zur formschlüssigen Aufnahme der Trägerarme bilden, werden gleichzeitig sowohl die Trägerarme mit dem Querträger als auch der Querträger in seiner Form als Quader steifigkeitserhöhend vervollständigt, da die beiden Grundflächen des Querträgers über die Trägerarme mit den restlichen Seitenflächen des Mantels des Querträgers verbunden werden. Vorzugsweise sind die Dimensionierung und die Form der Spalten an die Kontur der Trägerarme, insbesondere an deren Endbereichen angepasst, um damit eine formschlüssige Verbindung zwischen den beteiligten Komponenten herzustellen.

Nach einer Ausgestaltung der Erfindung weisen zwei gegenüberliegende Seitenflächen des Querträgers jeweils im mittleren Bereich entlang einer Mittellängslinie eine Aussparung auf, wodurch eine Gewichtsreduzierung ohne eine Verringerung der Steifigkeit des Querträgers erzielt wird.

Besonders vorteilhaft ist es, wenn gemäß einer Weiterbildung der Erfindung eine Seitenfläche des Querträgers, welche parallel zu der von den Trägerarmen aufgespannten Ebene verläuft, wenigstens teilweise mit einer nach innen gerichteten Wölbung ausgebildet ist. Dies erhöht die Steifigkeit und Festigkeit des Querträgers. Dabei ist vorzugsweise die für die Wölbung vorgesehene Seitenfläche mit zu den Grundflächen benachbarten Randstegen ausgebildet, derart dass der Bereich zwischen den Randstegen als Wölbung ausgeformt ist. Damit wird es möglich, zusätzlichen Bauraum für weitere Komponenten der Armlehne zu schaffen, ohne dass die Steifigkeit und Festigkeit der Trägerstruktur reduziert wird.

Nach einer weiteren Ausgestaltung der Erfindung ist an den Grundflächen des Querträgers stirnseitig jeweils ein weiteres Tubenteil als Aufnahmedorn zur Begrenzung einer unkontrollierten Schwenkbewegung der Trägerstruktur gegenüber der fahrzeugseitigen Halterung angeformt. Mit diesem weiteren Tubenteil kommt bspw. ein Crashpendel in Wirkverbindung.

Die mit dem Querträger zu verbindenden Trägerarme können weiterbildungsgemäß jeweils aus einem flachgepressten Rohr hergestellt werden, um mittels einer Schweißverbindung mit dem Querträger verbunden zu werden.

Alternativ können gemäß einer anderen Ausgestaltung der Erfindung sind die Trägerarme als Doppelblechteil mit zwei parallelen Blechteilen ausgebildet, die am freien Ende des Trägerarms verbunden sind und querträgerseitig mittels einer Schweißverbindung mit dem Querträger verbunden sind. Damit lässt sich mit solchen Trägerarmen das Gesamtgewicht der Trägerstruktur weiter reduzieren.

Die Erfindung wird nachfolgend anhand eines Ausführungsbeispiels unter Bezugnahme auf die beigefügten Figuren ausführlich beschrieben. Es zeigen:
- Figur 1: eine perspektivische Darstellung einer Trägerstruktur für eine Armlehne gemäß der Erfindung,
- Figur 2: eine perspektivische Darstellung eines Querträgers der Trägerstruktur nach Figur 1 in einer ersten Ansicht,
- Figur 3: eine perspektivische Darstellung eines Querträgers der Trägerstruktur nach Figur 1 in einer zweiten Ansicht,
- Figur 4: eine perspektivische Darstellung eines Querträgers der Trägerstruktur nach Figur 1 in einer dritten Ansicht,
- Figur 5: eine im Prinzip dargestellte Abwicklung des Querträgers nach Figur 2,
- Figur 6: eine Ansicht auf eine Grundfläche des Querträgers nach Figur 2,
- Figur 7: eine Schnittdarstellung des Querträgers gemäß Schnitt I-I nach Figur 4,
- Figur 8: eine perspektivische Detaildarstellung eines Querträgers gemäß der Erfindung mit einem Trägerarm aus einem Doppelblechteil, und
- Figur 9: eine perspektivische Darstellung einer Armlehne mit einer Trägerstruktur gemäß Stand der Technik.

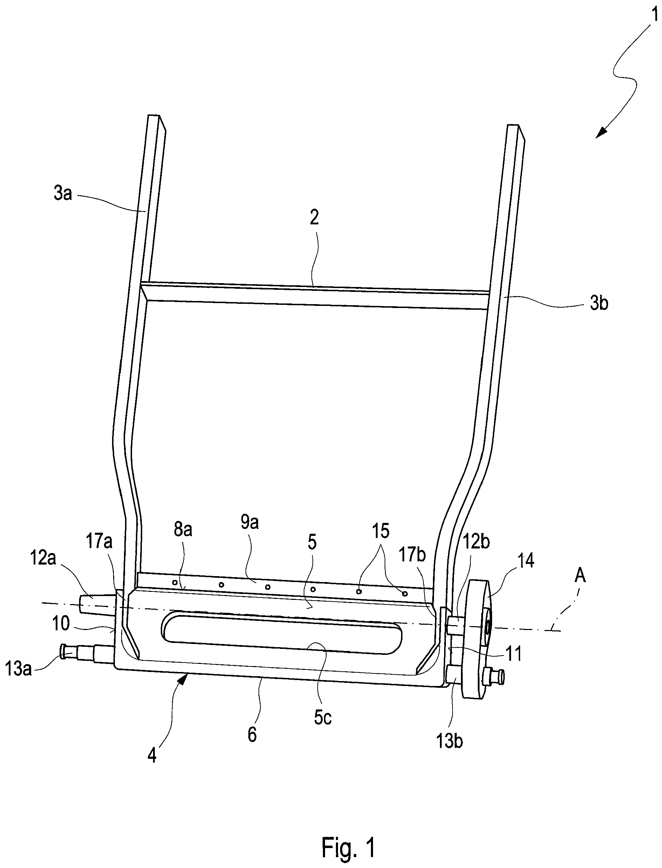

Die erfindungsgemäße Trägerstruktur 1 gemäß Figur 1 zur Aufnahme eines Armlehnenkörpers (nicht dargestellt) und zur Bildung einer schwenkbaren Armlehne eines Fahrzeugs umfasst einen Querträger 4, an welchem zwei Trägerarme 3a und 3b angeschweißt sind, die mittig zusätzlich über eine Querstrebe 2 verbunden sind. Der Querträger 4 wird über zwei Drehlager 12a und 12b an eine Halterung (nicht dargestellt) des Fahrzeugs um eine Schwenkachse A schwenkbar angelenkt. Zwei weitere Aufnahmedorne 13a und 13b sind ebenso an den Querträger 4 angeformt, wobei der Aufnahmedorn 13b mit einem Crashpendel 14 in Wirkverbindung kommt um ein unkontrolliertes Aufschwenken der Armlehne bei hohen Beschleunigungen des Fahrzeugs zu verhindern. Solche Crashpendel sind dem Fachmann bekannt und werden daher im Weiteren nicht näher erläutert.

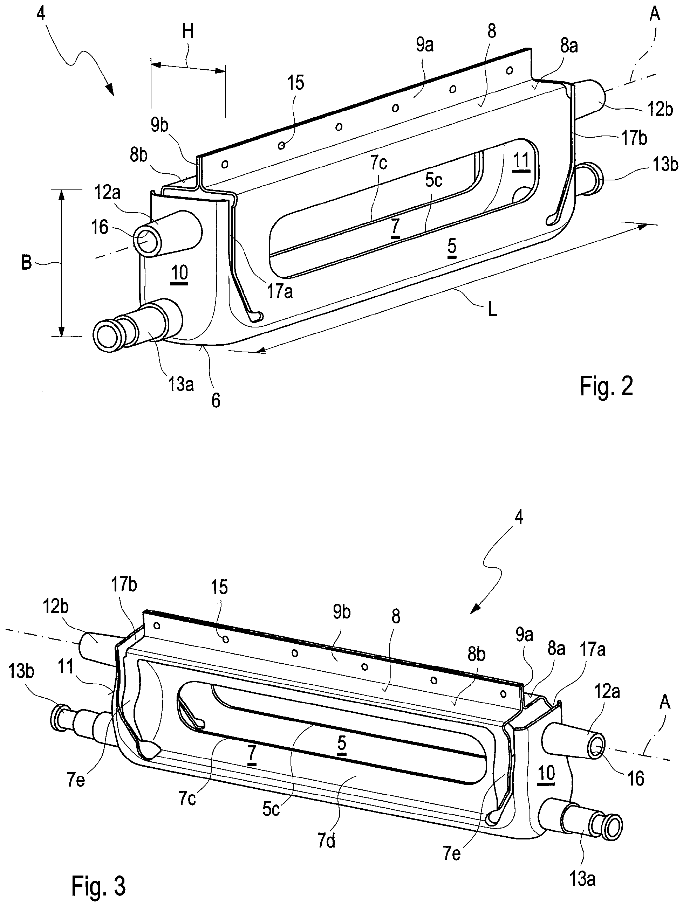

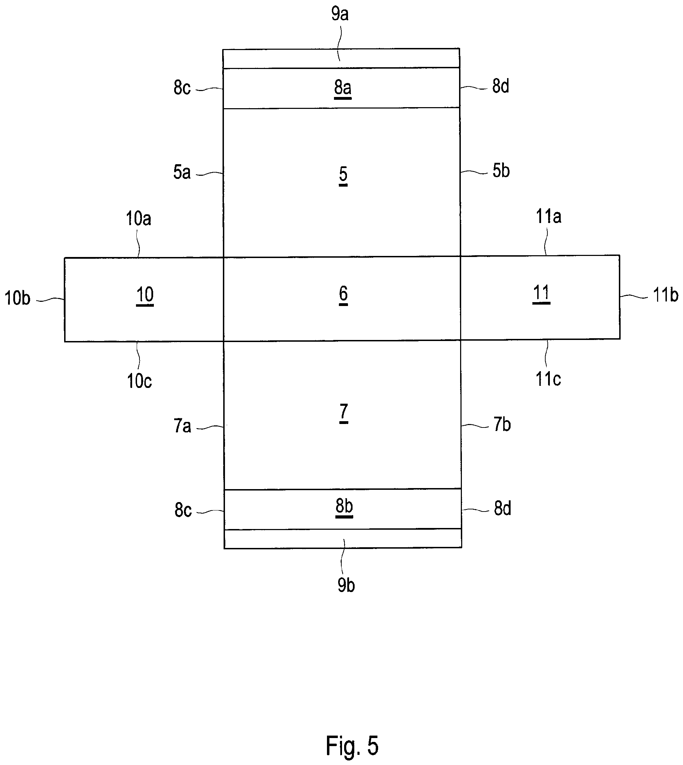

Die Figuren 2, 3 und 4 zeigen den Querträger 4 in unterschiedlichen perspektivischen Ansichten, aus denen dessen quaderförmige Gestalt erkennbar ist. Dieser quaderförmige Querträger 4 wird aus einem ebenen Stahlblech, welches im Wesentlichen als Abwicklung von dessen quaderförmigen Gestalt ausgebildet ist, durch Tubenformung, Biegung und Stanzung hergestellt. Diese Abwicklung ist in Figur 5 prinzipiell dargestellt, welche aus eine Mantelfläche des Querträgers 4 bildende Seitenflächen 5, 6, 7 und 8 und zwei Grundflächen 10 und 11, welche die Stirnflächen der quaderförmigen Gestalt bilden, besteht. Die Seitenfläche 8 besteht gemäß Figur 5 aus zwei Teilflächen 8a und 8b mit jeweils einer Verbindungslasche 9a und 9b, die bei vollständig hergestellten Querträger 4 senkrecht zu der Stirnfläche 8 abgewinkelt sind und flächig so aneinander liegen, dass sie bspw. mittels Schweißpunkten 15 verbunden werden können.

Ferner ist aus den Figuren 2 bis 4, 6 und 7 dessen flache Gestalt erkennbar, d. h. die Breite B ist wesentlich größer als die Höhe H des Querträgers 4.

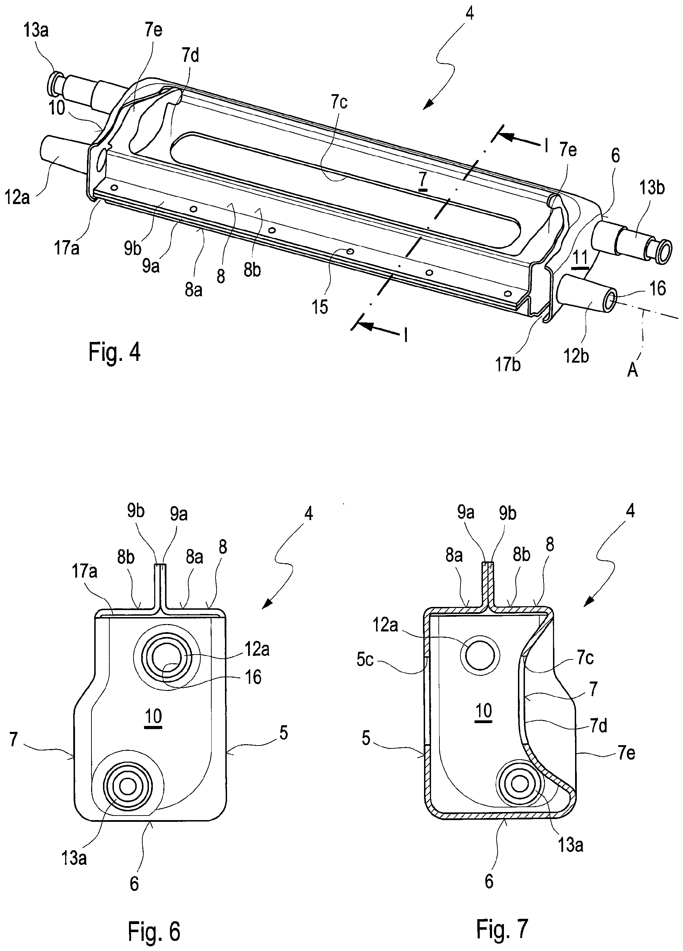

Der Querträger 4 wird als Blechumformteil in mehreren Prozessschritten aus der Abwicklung gemäß Figur 5 durch Stanzung, Tubenformung und Biegung hergestellt. So werden zunächst in den Seitenflächen 5 und 7 langlochartige Aussparungen 5c und 7c als Ausstanzungen erzeugt. Ferner wird in die Seitenfläche 7 eine nach innen gerichteten Wölbung 7d eingeprägt, wobei die Wölbung um eine Achse in Längsrichtung entsprechend der Schwenkachse A des Querträgers 4 verläuft. Dabei erstreckt sich diese Wölbung 7d nicht über die gesamte Länge L des Querträgers 4, sondern an den Kanten 7a und 7b der Seitenfläche 7 verbleibt jeweils ein Randsteg 7e, wie dies aus Figur 3 und der Schnittdarstellung nach Figur 7 zu erkennen ist.

In die Grundflächen bzw. Stirnflächen 10 und 11 werden durch Tubenformung jeweils ein Drehlager 12a und 12b sowie ein Aufnahmedorn 13a und 13b hergestellt, wobei in den Drehlagern 12a und 12b auch ein Gewinde 16 eingeschnitten wird.

Die so vorbereitete Abwicklung wird durch mehrere Biegeschritte in die Form gemäß den Figuren 2 bis 4, 6 und 7 gebracht, wobei die Stirnflächen 10 und 11 so bearbeitet sind, dass deren in der Abwicklung freien Kanten 10a, 10b und 10c bzw. 11a, 11b und 11c nicht an den Kanten 5a und 5b bzw. 7a und 7b der Seitenflächen 5 und 7 als auch nicht an den Kanten 8c und 8d der Teilflächen 8a und 8b anliegen, sondern ein Spalt 17a bzw. 17b verbleibt, der entlang der freien Kanten 10a, 10b und 10c bzw. 11a, 11b und 11c der Stirnfläche 10 bzw. 11 verläuft. Dieser Spalt 17a bzw. 17b nimmt das Ende des Trägerarms 3a bzw. 3b auf und wird durch Verschweißen mit dem Querträger 4, d. h. mit den Seitenflächen 5, 7 und 8 als auch mit der Stirnfläche 10 bzw. 11 stoffschlüssig verbunden. Die beteiligten Kanten dieser Seitenflächen 5, 7 und 8 sowie der Stirnflächen 10 und 11 sind entsprechend der Geometrie der Endbereiche der Trägerarme 3a und 3b konturiert. Die so erstellte Trägerstruktur 1 ist in Figur 1 dargestellt. Die verwendeten Trägerarme 3a und 3b stellen flachgepresste Rohre dar.

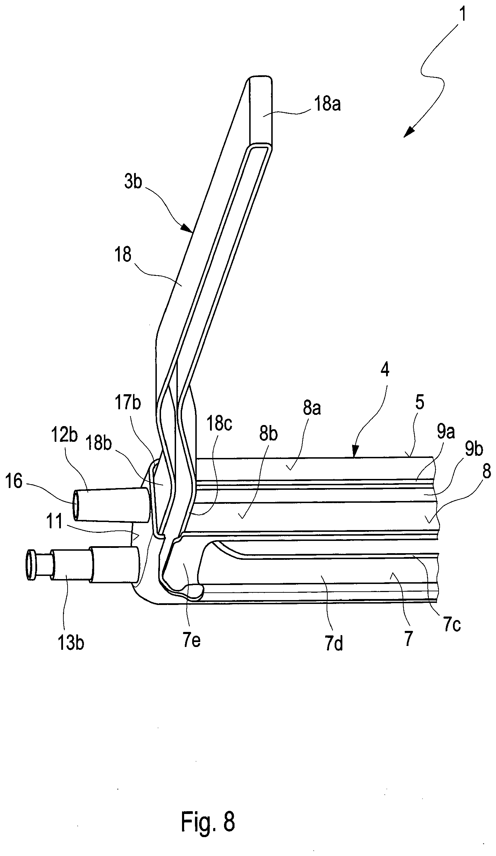

Die in der Trägerstruktur 1 gemäß Figur 1 verwendeten flachgepressten Rohre als Trägerarme 3a und 3b können auch durch ein Doppelblechteil ersetzt werden, wie dies in Figur 8 dargestellt ist. Dieses Doppelblechteil wird aus einem Blechstreifen 18 hergestellt, welches unter Ausbildung einer das Ende des Trägerarmes 3b bildenden Biegestelle 18a ein Mal gefaltet wird. Die freien Enden 18b und 18c dieses Blechstreifens 18 werden in Spalt 17b eingeführt und mit den Kanten 11a, 11b und 11c bzw. den Kanten 5b und 7b der Seitenflächen 5 und 7 verschweißt.

Mit dieser Lösung werden gegenüber der Verwendung der flachgepressten Rohre als Trägerarme 3a und 3b die Herstellungskosten reduziert, da die Verwendung solcher flachgepressten Rohre relativ teuer ist. Darüber hinaus wird auch eine Gewichtsreduzierung der derart hergestellten Trägerstruktur 1 erzielt.

### Bezugszeichen

- 1: Trägerstruktur
- 2: Querstrebe
- 3a: Trägerarm der Trägerstruktur 1
- 3b: Trägerarm der Trägerstruktur 1
- 4: Querträger der Trägerstruktur 1
- 5: Seitenfläche des Querträgers 4
- 5a: freie Kante der Seitenfläche 5 in der Abwicklung des Querträgers 4
- 5b: freie Kante der Seitenfläche 5 in der Abwicklung des Querträgers 4
- 5c: Aussparung der Seitenfläche 5
- 6: Seitenfläche des Querträgers 4
- 7: Seitenfläche des Querträgers 4
- 7a: freie Kante der Seitenfläche 7 in der Abwicklung des Querträgers 4
- 7b: freie Kante der Seitenfläche 7 in der Abwicklung des Querträgers 4
- 7c: Aussparung der Seitenfläche 7
- 7d: Wölbung der Seitenfläche 7
- 7e: Randsteg
- 8: Seitenfläche des Querträgers 4
- 8a: Teilfläche der Seitenfläche 8
- 8b: Teilfläche der Seitenfläche 8
- 8c: freie Kante der Seitenfläche 8 in der Abwicklung des Querträgers 4
- 8d: freie Kante der Seitenfläche 8 in der Abwicklung des Querträgers 4
- 9a: Verbindungslasche
- 9b: Verbindungslasche
- 10: Grundfläche, Stirnfläche des Querträgers 4
- 10a: freie Kante der Grundfläche 10 in der Abwicklung des Querträgers 4
- 10b: freie Kante der Grundfläche 10 in der Abwicklung des Querträgers 4
- 10c: freie Kante der Grundfläche 10 in der Abwicklung des Querträgers 4
- 11: Grundfläche, Stirnfläche des Querträgers 4
- 11a: freie Kante der Grundfläche 11 in der Abwicklung des Querträgers 4
- 11b: freie Kante der Grundfläche 11 in der Abwicklung des Querträgers 4
- 11c: freie Kante der Grundfläche 11 in der Abwicklung des Querträgers 4
- 12a: Drehlager des Querträgers 4
- 12b: Drehlager des Querträgers 4
- 13a: Aufnahmedorn des Querträgers 4
- 13b: Aufnahmedorn des Querträgers 4
- 14: Crashpendel
- 15: Schweißpunkte der Verbindungslaschen 9a und 9b
- 16: Gewinde der Drehlager 12a und 12b
- 17a: Spalt zur Aufnahme des Trägerarms 3a
- 17b: Spalt zur Aufnahme des Trägerarms 3b
- 18: Blechstreifen zur Herstellung der Trägerarme 3a und 3b
- 18a: Biegestelle des Blechstreifens 18
- 18b: Ende des Blechstreifens 18
- 18c: Ende des Blechstreifens 18

- 20: Armlehne gemäß Stand der Technik
- 21a: Armauflage
- 21b: Unterbau
- 22: Querstrebe
- 23: Trägerstruktur der Armlehne 20
- 23a: Trägerarm der Trägerstruktur 23
- 23b: Trägerarm der Trägerstruktur 23
- 24: Querträger der Trägerstruktur 23
- 24a: Rundstab des Querträgers 24
- 24b: Rundstab des Querträgers 24
- 25a: Drehlager des Querträgers 24
- 25b: Drehlager des Querträgers 24
- 26a: Aufnahmedorn des Querträgers 24
- 26b: Aufnahmedorn des Querträgers 24
- 27a: Steg des Querträgers 24
- 27b: Steg des Querträgers 24
- 28: Fanghakenabstützung

- 30: Halterung

## Patentansprüche

1. Trägerstruktur (1) für eine Armlehne zur schwenkbaren Anlenkung an eine Halterung eines Fahrzeugs, welche zwei einen Auflagekörper tragende Trägerarme (3a, 3b) aufweist, wobei die Trägerarme (3a, 3b) an einem Ende mit einem Querträger (4) verbunden sind und der Querträger (4) Bolzen (12a, 12b) zur Schwenklagerung in der Halterung aufweist,
**dadurch gekennzeichnet, dass**
- der Querträger (4) quaderförmig mit eine Mantelfläche bildenden Seitenflächen (5, 6, 7, 8) und gegenüberliegenden Grundflächen (10, 11) ausgebildet ist,
- der Querträger (4) durch Tubenformung, Biegung und Stanzung aus einem der Abwicklung des Querträgers entsprechenden Stahlblech hergestellt ist, wobei die Bolzen (12a, 12b) als Tubenteil an den Grundflächen (10, 11) des Querträgers (4) angeformt sind,
- der Querträger (4) mit Grundflächen (10, 11) derart ausgebildet ist, dass deren in der Abwicklung freien Kanten (10a, 10b, 10c, 11a, 11b, 11c) mit den benachbarten Kanten (5a, 7a, 8c, 5b, 7b, 8d) der Seitenflächen (5, 6, 7, 8) Spalten (17a, 17b) zur formschlüssigen Aufnahme der Trägerarme (3a, 3b) bilden, und
- jeweils ein Ende eines Trägerarms (3a, 3b) von einer Spalte (17a, 17b) aufgenommen und mit dem Querträger (4) verbunden ist.

2. Trägerstruktur (1) nach Anspruch 1,
**dadurch gekennzeichnet, dass** die Dimensionierung und die Form der Spalte (17a, 17b) an die Kontur der Trägerarme (3a, 3b) angepasst ist.

3. Trägerstruktur (1) nach Anspruch 1 oder 2,
**dadurch gekennzeichnet, dass** zwei gegenüberliegende Seitenflächen (5, 7) des Querträgers (4) jeweils im mittleren Bereich entlang einer Mittellängslinie eine Aussparung (5c, 7c) aufweisen.

4. Trägerstruktur (1) nach einem der vorhergehenden Ansprüche,
**dadurch gekennzeichnet, dass** eine Seitenfläche (7) des Querträgers (4), welche parallel zu der von den Trägerarmen (3a, 3b) aufgespannten Ebene verläuft, wenigstens teilweise mit einer nach innen gerichteten Wölbung (7d) ausgebildet ist.

5. Trägerstruktur (1) nach Anspruch 4,
**dadurch gekennzeichnet, dass** die für die Wölbung (7d) vorgesehene Seitenfläche (7) mit zu den Grundflächen (10, 11) benachbarten Randstegen (7e) ausgebildet ist, derart dass der Bereich zwischen den Randstegen (7e) als Wölbung (7d) ausgeformt ist.

6. Trägerstruktur (1) nach einem vorhergehenden Ansprüche,
**dadurch gekennzeichnet, dass** an den Grundflächen (10, 11) des Querträger (4) stirnseitig jeweils ein weiteres Tubenteil (13a, 13b) als Aufnahmedorn zur Begrenzung einer unkontrollierten Schwenkbewegung der Trägerstruktur (1) gegenüber der fahrzeugseitigen Halterung angeformt ist.

7. Trägerstruktur (1) nach einem der vorhergehenden Ansprüche,
**dadurch gekennzeichnet, dass** die Trägerarme (3a, 3b) jeweils aus einem flachgepressten Rohr hergestellt und mittels einer Schweißverbindung mit dem Querträger (4) verbunden sind.

8. Trägerstruktur (1) nach einem der Ansprüche 1 bis 6,
**dadurch gekennzeichnet, dass** die Trägerarme (3a, 3b) als Doppelblechteil mit zwei parallelen Blechteilen (18) ausgebildet sind, die am freien Ende (18b, 18c) des Trägerarms (3a, 3b) verbunden und querträgerseitig mittels einer Schweißverbindung mit dem Querträger (4) verbunden sind.

## Claims

1. Support structure (1) for an armrest for pivotable articulation at a bracket of a vehicle, which has two support arms (3a, 3b) supporting a bearing member, wherein the support arms (3a, 3b) are connected at one end with a transverse support (4) and the transverse support (4) has bolts (12a, 12b) for pivotable mounting in the bracket, **characterised in that**
- the transverse support (4) is formed as a cuboid with side surfaces (5, 6, 7, 8) forming a peripheral surface and oppositely situated base surfaces (10, 11),
- the transverse support (4) is manufactured by tube forming, bending and punching out of a steel sheet equal to the flat pattern of the transverse support, wherein the bolts (12a, 12b) are formed as a tube part at the base surfaces (10, 11) of the transverse support (4),
- the transverse support (4) is formed with base surfaces (10, 11) in such a way that their free edges in the flat pattern (10a, 10b, 10c, 11a, 11b, 11c) form with the abutting edges (5a, 7a, 8c, 5b, 7b, 8d) of the side surfaces (5, 6, 7, 8) apertures (17a, 17b) for the form-fitting reception of the support arms (3a, 3b), and
- in each case one end of a support arm (3a, 3b) is received by an aperture (17a, 17b) and connected with the transverse support (4).

2. Support structure (1) according to claim 1, **characterised in that** the dimensioning and the shape of the aperture (17a, 17b) is adapted to the contour of the support arms (3a, 3b).

3. Support structure (1) according to claim 1 or 2, **characterised in that** two oppositely situated side surfaces (5, 7) of the transverse support (4) each have in the central region along a central longitudinal line a recess (5c, 7c).

4. Support structure (1) according to one of the preceding claims, **characterised in that** a side surface (7) of the transverse support (4), which extends parallel to the level subtended by the support arms (3a, 3b), is formed at least partially with a bulge (7d) directed to the inside.

5. Support structure (1) according to claim 4, **characterised in that** the side surface (7) provided for the bulge (7d) is formed with edge flanges (7e) abutting the base surfaces (10, 11) such that the region between the edge flanges (7e) is formed out as a bulge (7d).

6. Support structure (1) according to one of the preceding claims, **characterised in that** at the base surfaces (10, 11) of the transverse support (4) on the front side is formed in each case a further tube part (13a, 13b) as receiving lug for restricting an uncontrolled pivotal movement of the support structure (1) with respect to the bracket on the vehicle side.

7. Support structure (1) according to one of the preceding claims, **characterised in that** the support arms (3a, 3b) are each manufactured from a flattened tube and are connected by means of a welding connection with the transverse support (4).

8. Support structure (1) according to one of claims 1 to 6, **characterised in that** the support arms (3a, 3b) are formed as double sheet-metal part with two parallel sheet metal parts (18), which are connected at the free end (18b, 18c) of the support arm (3a, 3b) and on the transverse support side are connected by means of a welding connection with the transverse support (4).

## Revendications

1. Structure porteuse (1) pour un accoudoir pour l'articulation pivotante à un support d'un véhicule, qui présente deux bras porteurs (3a, 3b) portant un corps d'appui, dans laquelle les bras porteurs (3a, 3b) sont raccordés à une extrémité à une poutre transversale (4) et la poutre transversale (4) présente des boulons (12a, 12b) pour le logement pivotant dans le support,
**caractérisée en ce que**
- la poutre transversale (4) est réalisée en forme de parallélépipède avec des surfaces latérales (5, 6, 7, 8) formant une surface enveloppe et des surfaces de base (10, 11) opposées,
- la poutre transversale (4) est fabriquée par formation de tube, pliage et estampage d'une tôle d'acier correspondant au développé de la poutre transversale, dans laquelle les boulons (12a, 12b) sont formés en tant que partie de tube sur les surfaces de base (10, 11) de la poutre transversale (4),
- la poutre transversale (4) est réalisée avec des surfaces de base (10, 11) de telle manière que leurs arêtes libres (10a, 10b, 10c, 11a, 11b, 11c) dans le développé avec les arêtes contiguës (5a, 7a, 8c, 5b, 7b, 8d) des surfaces latérales (5, 6, 7, 8) forment des fentes (17a, 17b) pour le logement à complémentarité de formes des bras porteurs (3a, 3b), et
- respectivement une extrémité d'un bras porteur (3a, 3b) est reçue par une fente (17a, 17b) et est raccordée à la poutre transversale (4).

2. Structure porteuse (1) selon la revendication 1,
**caractérisée en ce que**
le dimensionnement et la forme des fentes (17a, 17b) sont adaptés au contour des bras porteurs (3a, 3b).

3. Structure porteuse (1) selon la revendication 1 ou 2,
**caractérisée en ce que**
deux surfaces latérales (5, 7) opposées de la poutre transversale (4) présentent respectivement dans la zone médiane le long d'une ligne médiane longitudinale un évidement (5c, 7c).

4. Structure porteuse (1) selon l'une quelconque des revendications précédentes,
**caractérisée en ce que**
une surface latérale (7) de la poutre transversale (4) qui s'étend parallèlement au plan défini par les bras porteurs (3a, 3b), est réalisée au moins partiellement avec une courbure (7d) dirigée vers l'intérieur.

5. Structure porteuse (1) selon la revendication 4,
**caractérisée en ce que**
la surface latérale (7) prévue pour la courbure (7d) est réalisée avec des nervures de bord (7e) contiguës aux surfaces de base (10, 11) de telle manière que la zone soit moulée entre les nervures de bord (7e) en tant que courbure (7d).

6. Structure porteuse (1) selon l'une quelconque des revendications précédentes,
**caractérisée en ce que**
sur les surfaces de base (10, 11) de la poutre transversale (4) côté avant respectivement une autre partie de tube (13a, 13b) est formée en tant qu'épine de réception pour la limitation d'un mouvement de pivotement incontrôlé de la structure porteuse (1) par rapport au support côté véhicule.

7. Structure porteuse (1) selon l'une quelconque des revendications précédentes,
**caractérisée en ce que**
les bras porteurs (3a, 3b) sont fabriqués respectivement en un tube pressé à plat et sont raccordés au moyen d'une liaison soudée à la poutre transversale (4).

8. Structure porteuse (1) selon l'une quelconque des revendications 1 à 6,
**caractérisée en ce que**
les bras porteurs (3a, 3b) sont réalisés en tant que double partie de tôle avec deux parties de tôle (18) parallèles qui sont raccordées sur l'extrémité libre (18b, 18c) du bras porteur (3a, 3b) et sont raccordées côté poutre transversale au moyen d'une liaison soudée à la poutre transversale (4).
